## Europäisches Patentamt

## European Patent Office

## Office européen des brevets

(11) Veröffentlichungsnummer: **0 168 557**
**B1**

(12) **EUROPÄISCHE PATENTSCHRIFT**

(45) Veröffentlichungstag der Patentschrift:
20.07.88

(51) Int. Cl.⁴: **G 01 B 11/24**

(21) Anmeldenummer: **85104067.5**

(22) Anmeldetag: **03.04.85**

(54) Verfahren zum Auslesen einer Entfernungsbildzeile.

(30) Priorität: **22.06.84 DE 3423135**

(43) Veröffentlichungstag der Anmeldung:
**22.01.86 Patentblatt 86/4**

(45) Bekanntmachung des Hinweises auf die Patenterteilung:
**20.07.88 Patentblatt 88/29**

(84) Benannte Vertragsstaaten:
**FR GB**

(56) Entgegenhaltungen:
**US-A-4 188 544**

**768 ENGINEERS' DIGEST, Band 35, Nr. 2, Februar 1974, Seite 29, London, GB; "Opto-electronic method of monitoring the shape of extrusions"**

(73) Patentinhaber: **DORNIER GMBH, Postfach 1420, D-7990 Friedrichshafen 1 (DE)**

(72) Erfinder: **Eibert, Max, Dr., Sommerweg 3, D-7990 Friedrichshafen 24 (DE)**
Erfinder: **Lux, Peter, Dr., Untere Seestrasse 120, D-7994 Langenargen (DE)**
Erfinder: **Metzdorf, Walter, Dr., Frühlingsweg 11, D-7990 Friedrichshafen 24 (DE)**

(74) Vertreter: **Landsmann, Ralf, Dipl.- Ing., Kleeweg 3, D-7990 Friedrichshafen 1 (DE)**

EP 0 168 557 B1

## Beschreibung

Die Erfindung betrifft ein Verfahren zum Auslesen einer Entfernungsbildzeile bei der Aufnahme von Entfernungsbildern nach dem Triangulationsprinzip.

Ein Entfernungsbild ist eine Abbildung eines Objekts, dessen Bildpunkte nicht wie bei einem normalen Bild den Helligkeiten oder Farben der Objektpunkte entsprechen sondern den jeweiligen Entfernungen der entsprechenden Objektpunkte.

Bekannt sind Verfahren zum zweidimensionalen Vermessen von Entfernungsinformationen in Form eines Entfernungsbildes (P. Levi, Elektronik 12, 1983). Die bekannten Verfahren lassen sich in zwei Gruppen einteilen, die sich durch das physikalische Messprinzip unterscheiden. In Laufzeitmessungen elektromagnetischer oder akustischer Wellen und in Triangulationsmethoden.

Das erste Prinzip eignet sich für Messbereiche von einem Meter bis unendlich und liefert Messgenauigkeiten bis zu 1 mm, das zweite Prinzip wird aufgrund des Zusammenhangs von Messbasis und Messgenauigkeit hauptsächlich im Nahbereich < 1 m eingesetzt. Nachteilig an den bekannten Systemen mit Laufzeitmessung ist, dass generell die Entfernung jeweils von einem Messpunkt zum Sensor vermessen wird; ein ganzes Bild wird durch Strahlablenkung, beispielsweise mit rotierendem oder oszillierendem Spiegel erzeugt. Ein derartiges System ist mechanisch und optisch aufwendig und entsprechend teuer.

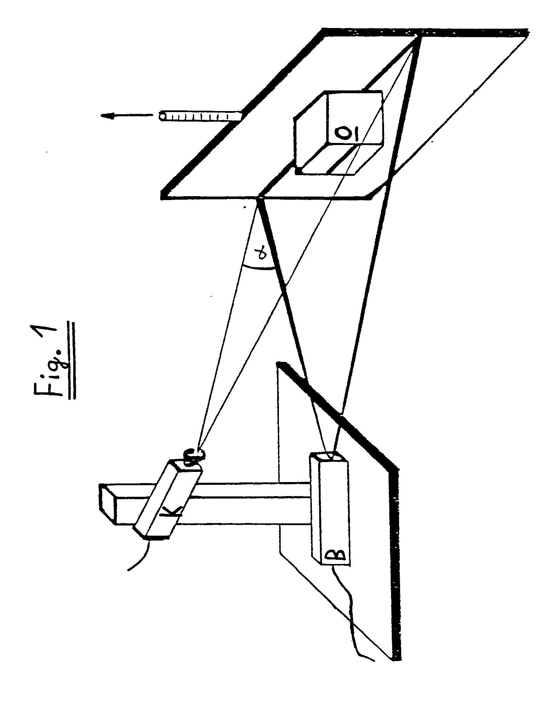

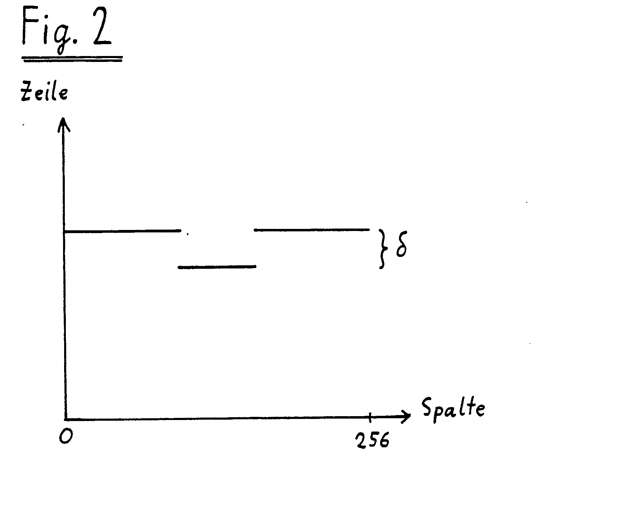

Triangulationsverfahren gestatten das gleichzeitige Aufnehmen beispielsweise einer gesamten Entfernungsbildzeile. Drei wird ein dünner Lichtstreifen von einer Beleuchtungseinrichtung auf ein Objekt projiziert und von einer Fernsehkamera aufgenommen, wobei zwischen der Beleuchtungseinrichtung und der Blickrichtung der Kamera ein Winkel vorhanden ist, wie in Fig. 1 gezeigt ist. Ein von der Kamera aufgenommenes Bild ist in Fig. 2 gezeigt. Zu erkennen ist, dass das Bild des Lichtstreifens, die Entfernungsbildzeile, eine Versetzung aufweist, deren Grösse dem Entfernungsunterschied des Objekts vom Hintergrund entspricht.

Nachteilig an diesem Verfahren ist, dass die Auslesezeit für ein komplettes Entfernungsbild, wenn die CCIR-Fernsehnorm vorausgesetzt wird (50 Halbbilder/sec), etwa 5 sec für 256 Entfernungsbildzeilen beträgt.

Aus der US-PS-4 188 544 ist ein Verfahren zur Aufnahme einer Entfernungsbildzeile nach dem Triangulationsverfahren bekannt. Die Bildaufnahme kann über eine Fernsehkamera, ein Sensorfeld oder eine Sensorzeile mit einem Scanner erfolgen. Zur Verarbeitung des Bildes werden ein Analog-Digital-Wandler und ein Computer verwendet.

Aufgabe der Erfindung ist es, ein Verfahren zum Auslesen einer Entfernungsbildzeile zu schaffen, mit dem eine der CCIR Norm entsprechende Auslesegeschwindigkeit erreicht wird, so dass eine Auswertung der Entfernungsbilder mit einer Geschwindigkeit erfolgen kann, die der Aufnahmegeschwindigkeit bei Fernsehkameras entspricht.

Diese Aufgabe wird erfindungsgemäss gelöst von einem Verfahren mit den in den Ansprüchen angegebenen Schritten. Vorrichtungen zur Durchführung des Verfahrens sind Gegenstände von Unteransprüchen.

Mit den angegebenen Verfahren kann eine Entfernungsbildzeile mit z. B 256 Spalten mit verfügbaren Bauelementen in Fernsehnorm (ca. 550 ns pro Taktperiode) in einer Gesamtzeit von ca. 128 μ sec ausgelesen werden.

Erfindungsgemäss wurde erkannt, dass es zum Auslesen einer Entfernungsbildzeile nicht notwendig ist, alle Grauwerte aller Bildpunkte abzurufen und zu verarbeiten, sondern dass es schon reicht, die Höhe der Entfernungsbildzeile in jeder Spalte aufzunehmen und weiterzuverarbeiten. Erfindungsgemäss wird das Bild also in jedem Takt spaltenweise ausgelesen, wobei jeweils die Bildinformationen einer Spalte über alle Zeilen gleichzeitig ausgewertet werden. Es können handelsübliche Kameras, Charge Coupled Devices CCD, Charge Injection Devices CID oder Photodiodenarrays verwendet werden, die spaltenweise auslesbar sind.

Der Spalteninhalt wird parallel einem Umsetzer übergeben, der die Information digitalisiert, im einfachsten Fall jedem Punkt eine 0 oder eine 1 zuordnet. Die Umsetzung erfolgt in Abhängigkeit von der Beleuchtung und der Hintergrundhelligkeit. Die Umsetzung kann durch Schwellwertschaltungen - evtl. mit Verstärkern - z. B. durch eine Reihe von Komperatoren - erfolgen.

Am Ausgang des Umsetzers liegen nun so viele binäre Informationen, wie das Bild Zeilen hat. Diese Informationen gelangen parallel in eine Auswahllogikschaltung, in der nach Prioritätskriterien die Zeile gesucht wird, die das Bild des Lichtstreifens enthält.

Diese Information gelangt in einen Dekoder, wo die von der Auswahllogikschaltung detektierte Zeile in ein Digitalwort oder ein Binärwort umgesetzt wird. Am Ausgang steht nunmehr ein bei 256 Zeilen 8-stelliges Binärwort, das angibt, in welcher Höhe das Bild des Lichtstreifens in der hier getakteten Spalte liegt.

Der Vorgang kann nun für die nächste Spalte durchgeführt werden. Sind alle Spalten abgefragt, steht eine Entfernungsbildzeile als Folge von Binärworten, also sehr gut weiterverarbeitbar, zur Verfügung.

Wird die Streifenbeleuchtung beispielsweise durch Zwischenschalten einer mechanischen Ablenkeinheit (Schwing- oder Rotationsspiegel) oder durch eine elektronische Lichtablenkeinheit (beispielsweise durch eine gesteuerte Flüssigkristallapertur) so abgelenkt, dass sie das Objekt überstreicht, oder wird das Objekt in die in Fig. 1 angezeigte Richtung bewegt, so entsteht ein Signal, dessen digitale Signalwerte Bildpunkten eines Entfernungsbildes entsprechen.

Diese Information kann nun entweder in einer nachgeschalteten Recheneinheit verarbeitet werden (beispielsweise zur Objekterkennung in Handhabungssystemen) bzw. auf einem Monitor, nach D/A-Wandlung und Zufügung der nötigen Synchronsignale, dargestellt werden.

Die Erfindung wird anhand von 4 Figuren näher erläutert. Es zeigen

Fig. 1 eine Vorrichtung zur Aufnahme von Entfernungsbildern nach dem Triangulationsprinzip,

Fig. 2 eine Lichtschnittinformation einer Entfernungsbildzeile,

Fig. 3 ein Blockschaltbild einer erfindungsgemässen Vorrichtung,

Fig. 4 eine Schaltung für Auswahllogik und Dekodierung.

Fig. 1 zeigt das Prinzip der Aufnahme von Entfernungsbildern durch Triangulation. Die dazu benötigte Vorrichtung enthält eine Beleuchtung B, die einen Lichtstreifen (hier schwarz gezeichnet) auf ein Objekt O wirft, und eine Kamera K mit Auswerteeinheit. Die Beleuchtung B und die Kamera K sind so angeordnet, dass zwischen der Beleuchtungsachse und der Kameraachse ein spitzer Winkel α liegt. Von der Kamera K aus gesehen ist der Lichtstreifen auf dem erhabenen Objekt O etwas gegen den Lichtstreifen am Hintergrund versetzt. Aus dem Versatz ist, bei bekanntem Winkel α und bekanntem Abstand B zu K die Entfernung des Objekts O (oder seine Höhe) berechenbar.

Fig. 2 zeigt das Bild, wie es die Kamera K in der in Fig. 1 gezeigten Anordnung aufnimmt. Zu erkennen ist, dass die Schnittlinie des Lichtstreifens am Objektort eine Versetzung nach unten aufweist. Die Versetzung δ entspricht dem Entfernungsunterschied zwischen Objekt und Hintergrund.

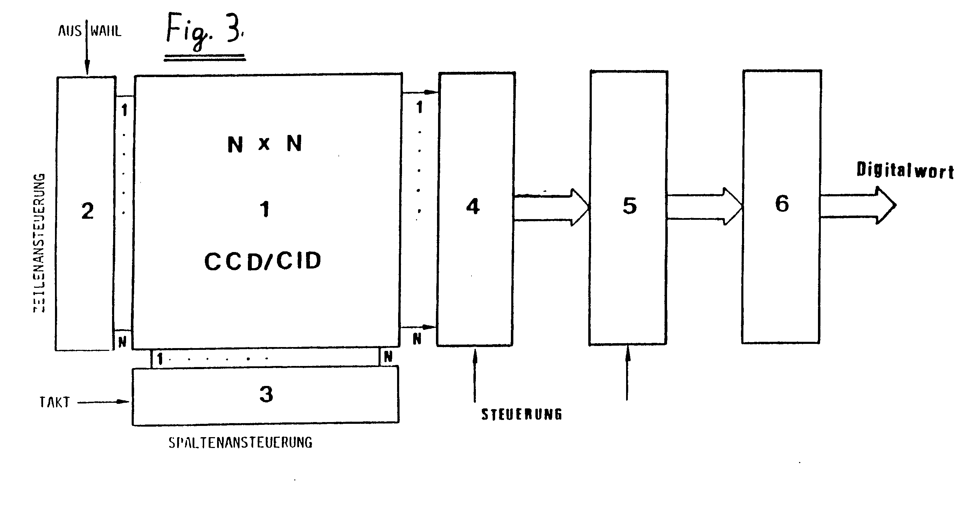

Fig. 3 zeigt ein Blockschaltbild einer erfindungsgemässen Vorrichtung mit einem CCD, CID oder Photodioden Bildsensor 1 mit NXN Bildpunkten, Zeilenansteuerung 2, Spaltenansteuerung 3, Umsetzer 4, Auswahllogikschaltung 5 und Dekoder 6.

Zur Gewinnung einer Entfernungsbildzeile werden nun mittels der Zeilenansteuerung 2 alle N-Zeilen gleichzeitig angesteuert, so dass das Auslesen spaltenweise durch die Spaltenansteuerung 3 erfolgen kann. Mit jedem Steuertakt an 3 wird eine Spalte selektiert und der Inhalt vom Umsetzer 4 übernommen.

Im steuerbaren Umsetzer 4 werden, in Abhängigkeit von Beleuchtung und Hintergrundhelligkeit, die Helligkeitssignale der selektierten Spalte in Digitalsignale umgesetzt. In der Auswahllogikschaltung 5 wird nach Prioritätskriterien die für die Bildung des Digitalwertes signifikante Zeile bestimmt. Als Beispiel wird bei der Bestimmung eines Höhenprofils die niedrigste Zeile mit einem Digitalwert ausgewählt.

Als weiterer Schritt in der Verarbeitungskette erfolgt die Dekodierung im Dekoder 6. Dort wird die von der Auswahllogik selektierte Zeile in einen Digital- oder Binärwert umgesetzt. Dieser Wert entspricht einem Entfernungswert der Entfernungsbildzeile mit einer Position bestimmt durch die selektierte Sensorspalte.

In einer vorteilhaften Ausführung besteht der Umsetzer 4 aus N Komparatoren, die von einem Schwellwert gesteuert werden. Der Schwellwert kann manuell eingestellt oder vom Signalmittelwert gesteuert werden. Die Komparatoren können diskret aufgebaut bzw., wie in A/D-Konvertern, hochintegriert in einem bzw. mehreren Bausteinen angeordnet werden. Ausgangsseitig von Block 4 liegen N digitale Signale vor, von denen eine bzw. mehrere Signalleitungen ein dem Lichtband entsprechendes Signal (logisch 1 bzw. 0) führen.

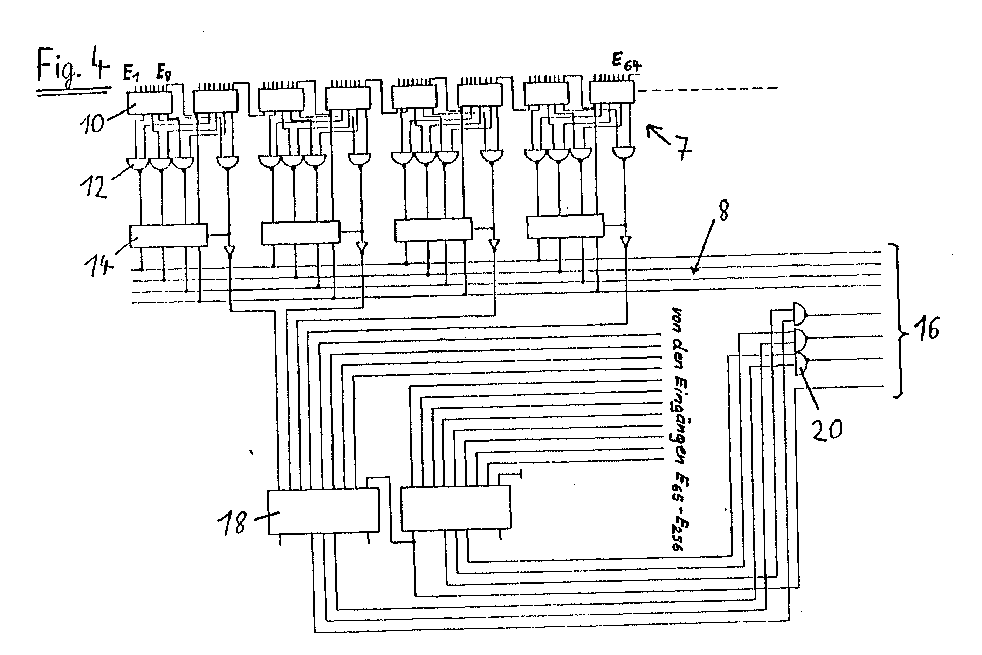

Fig. 4 zeigt ein vorteilhaftes Ausführungsbeispiel für die Auswahllogikschaltung 5 und den Dekoder 6. Die Schaltung zeigt oben die ersten Eingänge $E_1$ bis $E_{64}$ der 256 Eingänge. Die ersten 64 Eingänge führen in acht Acht-auf-drei Prioritätskodierer 10 (z. B. LS 148 der Firma Texas Instruments). Deren Ausgänge werden über NAND-Gatter 12 (z. B. LS 00) verknüpft und gelangen über vier Busleitungstreiber 14 (z. B. LS 241) auf den Datenbus (z. B. LS 04) zum Ausgang 16. Jeder vierte NAND-Gatterausgang ist zu zwei weiteren Acht-auf-drei Prioritätskodierern 18 (z. B. LS 148) geführt. Dorthin führen auch die 12 NAND-Ausgänge der weiterverarbeitenden Eingänge $E_{65}$ bis $E_{256}$. Die Ausgänge der Bauteile 18 führen über NAND-Gatter 20 zum Ausgang 16. Insgesamt liegt am Ausgang 16 ein 8 bit Binärwort, z. B. 00100100, das die Höhe der Entfernungsbildzeile in dieser Spalte beschreibt. Die Auswahllogikschaltung wählt in diesem Beispiel die jeweils ersten (oder letzten) der N Signale, die einem beleuchteten Lichtpunkt entsprechen. Aus den angegebenen Bausteinen ist ein 16 : 4 Prioritäts-Dekoder (7) aufgebaut. In dem angegebenen Beispiel sind zur Dekodierung der insgesamt 256 Datenleitungen 16 solcher Baugruppen nötig, vier davon sind beispielhaft ausgeführt. Die Verschaltung der Baugruppen untereinander verhindert, dass, wenn eine Baugruppe, die einer höheren Leitungsnummer entspricht, ein Signal erkennt, ein einer niedrigeren Baugruppe zugeordnetes Signal weiterverarbeitet wird. Nur eine dieser 16 Baugruppen 7 darf daher ein von 0 verschiedenes Signal enthalten. Dieses Signal entspricht der Position des der höchstwertigen Datenleitung zugeordneten Eingangssignals innerhalb der Baugruppe (7). Die Information ist dem niedrigwertigen Teil des Ausgangssignals in Form des Datenbusses (8) zugeordnet. Der zweite Teil der Prioritätsdekoderschaltung hat die Aufgabe, die Position der angesprochenen Baugruppe innerhalb der 16 möglichen und damit die 4 höchstwertigen Bits des Datenworts zu bestimmen. Diese Aufgabe wird ebenfalls mit einer der Baugruppe 7 entsprechenden Schaltung gelöst, wobei als Eingangsinformation der Baugruppe ein Signal verwendet wird, das das Vorliegen von Informationen innerhalb des Bausteins anzeigt.

Die Schaltung ist für ein Fernsehsignal in Echtzeit ausgelegt.

**Patentansprüche**

1. Verfahren zum Auslesen einer Entfernungsbildzeile bei der Aufnahme von Entfernungsbildern nach dem Triangulationsprinzip, wobei von einer an sich bekannten Kamera ein auf das Objekt fallender Lichtstreifen aufgenommen wird, dadurch gekennzeichnet, dass in jedem Takt

a. der gesamte Inhalt einer Spalte eines Bildsensors (1) mit Zeilenansteuerung (2) und Spaltenansteuerung (3) parallel ausgelesen wird,

b. der Spalten-Inhalt in einem Umsetzer (4) digitalisiert wird,

c. mittels einer Auswahllogikschaltung (5) die für die Entfernung signifikante Zeile ermittelt wird und

d. in einem Dekoder (6) dieser Zeile ein der Entfernung entsprechendes Binärwort zugeordnet wird.

2. Verfahren nach Anspruch 1, dadurch gekennzeichnet, dass im Umsetzer (4) jedem Bildpunkt ein binärer Wert 1 oder 0 zugeordnet wird.

3. Verfahren nach einem der Ansprüche 1 oder 2, dadurch gekennzeichnet, dass in der Auswahllogikschaltung (5) die erste oder letzte mit 1 belegte Zeile gesucht wird oder bei einer Gruppe von belegten Zeilen die mittlere gesucht wird.

4. Vorrichtung zur Durchführung des Verfahrens nach Anspruch 1, gekennzeichnet durch die Hintereinanderschaltung von

- einer spaltenweise auslesbaren Kamera (K) mit Zeilenansteuerung (2) und Spaltenansteuerung (3)

- einem Umsetzer (4), der so viele parallele Eingänge hat, wie das von der Kamera (K) gelieferte Bild Zeilen hat,

- einer Auswahllogikschaltung (5) und

- einem Dekoder (6).

5. Vorrichtung nach Anspruch 4, dadurch gekennzeichnet, dass als Kamera (K) ein CCD oder ein CID oder ein Photodiodenarray vorgesehen sind.

6. Vorrichtung nach Anspruch 4, dadurch gekennzeichnet, dass als Umsetzer (4) eine Scwellwertschaltung aus N einstellbaren Komparatoren vorgesehen ist.

7. Vorrichtung nach Anspruch 4, dadurch gekennzeichnet, dass als Auswahllogikschaltung (5) ein Komparator mit Schwellwertschaltern vorgesehen ist, der von oben nach unten das erste belegte Feld registriert und dessen Zeilennummer weitergibt.

8. Vorrichtung nach Anspruch 4, dadurch gekennzeichnet, dass als Auswahllogikschaltung (5) und Dekoder (6) für 256 Zeilen ein Prioritätsdekoder mit 32 Acht-auf-drei Prioritätskodierern (10), deren Ausgänge über NAND-Gatter (12) und Busleitungstreiber (14) auf einen 4-bit Bus (8) zum Ausgang (16) und über 8 weitere Acht-auf-drei Prioritätskodierer (18) und NAND-Gatter (20) auf die nächsten 4 bit des Ausgangs (16) führen, vorgesehen ist.

9. Vorrichtung nach Anspruch 4, dadurch gekennzeichnet, daß zur Schwenkung des Lichtstreifens eine elektronische Lichtablenkeinheit vorgesehen ist.

**Claims**

1. Method of interpreting lines of scanned image at a distance, when reproducing images from a distance according to the triangulation principle, whereby a light beam falling onto the object is picked up by a camera known in itself, characterised in that during each cycle:

a. the total content of a column of an image sensor (1) with line drive (2) and column drive (3) is read in parallel,

b. the column content is digitized in a converter (4),

c. the lines which are significant for the distance are determined by means of a selection logic circuit (5) and

d. a binary word corresponding to the distance is assigned to this line in a decoder (6).

2. Method according to claim 1, characterised in that a binary value 1 or 0 is assigned to each image spot in the converter (4).

3. Method according to one of claims 1 or 2, characterised in that the first or last line held with 1 is searched or in the case of a group of held lines the middle one is searched.

4. Device for carrying out the method according to claim 1, characterised by the connection in series of:

- a camera (K) with line drive (2) and column drive (3), which can be read in columns,

- a converter (4), which has the same number of parallel inputs as the image supplied by the camera (K) has lines,

- a selection logic circuit (5) and

- a decoder (6).

5. Device according to claim 4, characterised in that a CCD or CID or a photodiode array are provided as a camera (K).

6. Device according to claim 4, characterised in that a threshold value circuit formed from N adjustable comparators is provided as a converter (4).

7. Device according to claim 4, characterised in that a comparator with threshold value switches, which registers the first held field from the top downwards and passes on its line number, is provided as a selection logic circuit (5).

8. Device according to claim 4, characterised in that a priority decoder with 32 eight-on-three priority coders (10), the outputs of which run over NAND gates (12) and bus line driver (14) onto a 4 bit bus (8) to the output (16) and over 8 further eight-on-three priority coders (18) and NAND gates (20) to the next 4 bit of the output (16), is provided as a selection logic circuit (5) and decoder (6) for 256 lines.

9. Device according to claim 4, characterised in that an electronic light deflection unit is provided for turning the light beam.

**Revendications**

1. Procédé numérique pour l'interprétation d'une ligne d'image de distance lors de la prise d'images de distance d'après le principe de la triangulation, une caméra bien connue en soi enregistrant une bande lumineuse projetée sur l'objet, <u>caractérisé en ce</u> qu'à chaque cycle

a) la totalité du contenu d'une colonne d'un détecteur vidéo (1) avec commande de lignes (2) et commande de colonnes (3) est analysée en parallèle,

b) le contenu de la colonne est numérisé dans un convertisseur (4),

c) la ligne significative pour la distance est déterminée à l'aide d'un circuit logique de sélection (5), et

d) un mot binaire correspondant à la distance est associé à cette ligne dans un décodeur (6).

2. Procédé selon la revendication 1, caractérisé en ce qu'une valeur binaire 1 ou 0 est associée dans le convertisseur (4) à chaque point d'image.

3. Procédé selon l'une des revendications 1 ou 2, caractérisé en ce que le circuit logique de sélection (5) recherche la première ou la dernière ligne occupée par 1 ou, dans un groupe de lignes occupées, la ligne médiane.

4. Dispositif pour la mise en oeuvre du procédé selon la revendication 1, caractérisé en ce qu'il comprend un montage en série

- d'une caméra (K) avec commande de lignes (2) et commande de colonnes (3) permettant l'interprétation par colonnes,

- d'un convertisseur (4) avec autant d'entrées parallèles que l'image fournie par la caméra (K) présente de lignes,

- d'un circuit logique de sélection (5) et

- d'un décodeur (6).

5. Dispositif selon la revendication 4, caractérisé en ce qu'il comprend comme caméra (K) un CCD ou un CID ou une matrice de photodiodes.

6. Dispositif selon la revendication 4, caractérisé en ce qu'un circuit à seuil composé de N comparateurs réglables est prévu comme convertisseur (4).

7. Dispositif selon la revendication 4, caractérisé en ce qu'il comprend comme circuit logique de sélection (5) un comparateur avec des commutateurs à seuil qui enregistre du haut en bas le premier champ occupé et retransmet le numéro de ligne de celui-ci.

8. Dispositif selon la revendication 4, caractérisé en ce qu'il comprend comme circuit logique de sélection (5) et comme décodeur (6) pour 256 lignes un décodeur de priorités avec 32 codeurs de priorités huit-sur-trois (10) dont les sorties mènent, par l'intermédiaire de portes logiques NON-ET (12) et d'étages d'attaque de communicateur (14), à un bus de 4 bits (8) et à la sortie (16) et, par l'intermédiaire de 8 autres codeurs de priorités huit-sur-trois (18) et de portes logiques NON-ET (20), aux 4 bits suivants de la sortie (16).

9. Dispositif selon la revendication 4, caractérisé en ce qu'une unité de déviation de lumière électronique est prévue pour l'orientation de la bande lumineuse.

Fig. 1

Fig. 2

Zeile

Spalte

O

256

$\}\delta$

Fig. 3.

Fig. 4

$E_1$  $E_8$

$E_{64}$

10

12

14

7

8

16

20

18

von den Eingängen $E_{65} - E_{256}$

0 168 557